# EUROPÄISCHE PATENTANMELDUNG

(11) **EP 4 663 983 A1**
(43) Veröffentlichungstag der Anmeldung: **17.12.2025**
(21) Anmeldenummer: 24181421.9
(22) Anmeldetag: 11.06.2024
(51) Int. Cl.: F16K 1/22, F16K 27/02

(54) **ABSPERRKLAPPENGEHÄUSEBAUGRUPPE**

(71) Anmelder: Georg Fischer Rohrleitungssysteme AG, 8201 Schaffhausen (CH)
(72) Erfinder: Wasetzki, Maxim, 78224 Singen (DE); Mayer, Lars, 78476 Allensbach (DE); Rech, Richard, 78166 Donaueschingen (DE); Neubrand, Fabian, 78234 Welschingen (DE)
(74) Vertreter: Fenner, Seraina

(57) **Zusammenfassung**

Absperrklappengehäusebaugruppe für eine Absperrklappe mit einem drehbar im Gehäuse (2) um eine vertikal verlaufende Achse (4) gelagerten Schliesselement (3), beinhaltend ein Gehäuse aus Kunststoff oder Leichtmetall, eine vertikal verlaufende Achse, eine im Gehäuse angeordnete Schliesselement aufnehmenden Durchströmungsöffnung (5) und stirnseitig angeordnete Flansche (6) wobei im Gehäuse mindestens ein Verstärkungselement (7) angeordnet ist das mittels Kraftaufnahmemitteln (8) mit den Flansche derart verbunden ist, dass auf die Achse auftretende Innendruckkräfte von den Kraftaufnahmemitteln über das Verstärkungselement aufgenommen werden.

## Beschreibung

Die Erfindung betrifft eine Absperrklappengehäusebaugruppe für eine Absperrklappe mit einem drehbar im Gehäuse um eine vertikal verlaufende Achse gelagerten Schliesselement, beinhaltend ein Gehäuse aus Kunststoff oder Leichtmetall, eine vertikal verlaufende Achse, eine im Gehäuse angeordnete, Schliesselement aufnehmende Durchströmungsöffnung und stirnseitig angeordnete Flansche.

Im Rohrleitungsbau werden Absperrklappen eingesetzt um Rohrleitungen, die flüssige oder gasförmige Medien transportieren, zu schliessen bzw. den Durchfluss zu regeln. Dazu ist es wichtig, dass die Absperrklappe, insbesondere das Gehäuse, den auftretenden Innendrücken bei geschlossener Klappe über lange Zeit sowie über viele Stellzyklen standhalten. Durch den hohen Druck auf den Teller in geschlossenem Zustand verbiegt sich die Achse und drückt auf das Gehäuse, was bei Kunststoffgehäusen und bei hohen Drücken und somit hohen wirkenden Kräften schnell zum Versagen führen kann, wodurch Spannungsrisse entstehen können. Deshalb weisen Absperrklappen aus Kunststoff oft einen Verstärkungsring, der im Gehäuse eingebettet ist und die Achse umgibt auf. Dann wird zwar das Gehäuse an dieser Stelle verstärkt, die Drücke werden aber dennoch in das Kunststoffgehäuse übertragen, welches für solch hohe Kräfte keine ausreichende Festigkeit aufweist.

Die EP 4 191 100 A1 offenbart eine Verstärkungshülse im Gehäusehals. Dennoch muss das Gehäuse die Innendruckkräfte bei geschlossener Absperrklappe aufnehmen, weshalb es bei einem Kunststoffgehäuse schnell zu einem Versagen führen kann.

Es ist Aufgabe der Erfindung eine Absperrklappengehäusebaugruppe vorzuschlagen, die ein Gehäuse aus Kunststoff oder Leichtmetall aufweist und den zugelassenen Drücken gemäss den anzuschliessenden Rohrleitungen standhält.

Diese Aufgabe wird erfindungsgemäss dadurch gelöst, dass im Gehäuse mindestens ein Verstärkungselement angeordnet ist, das mittels Kraftaufnahmemitteln mit den Flanschen derart verbunden ist, dass auf die Achse auftretende Innendruckkräfte von den Kraftaufnahmemitteln über das Verstärkungselement aufgenommen werden.

Die erfindungsgemässe Absperrklappengehäusebaugruppe für eine Absperrklappe mit einem drehbar im Gehäuse um eine vertikal verlaufende Achse gelagerten Schliesselement, beinhaltend ein Gehäuse aus Kunststoff oder Leichtmetall. Das Gehäuse ist vorzugsweise als schmale Bauform ausgebildet. Die erfindungsgemässe Absperrklappengehäusebaugruppe beinhaltet eine vertikal durch das Gehäuse verlaufende Achse. Zudem beinhaltet die erfindungsgemässe Absperrklappengehäusebaugruppe eine im Gehäuse angeordnete Schliesselement aufnehmende Durchströmungsöffnung, vorzugsweise ist die Durchströmungsöffnung kreisförmig ausgebildet. An den Stirnseiten des Gehäuses der erfindungsgemässen Absperrklappengehäusebaugruppe sind Flansche angeordnet. Es ist vorteilhaft, wenn die Flansche als separate Teile ausgebildet sind, wobei Los- wie auch Festflansche verwendet werden können. Die Flansche sind vorzugsweise aus einem Material mit hoher Festigkeit wie beispielsweise einem metallischen Werkstoff, vorzugsweise Stahl oder Gusseisen, oder einem faserverstärkten Werkstoff ausgebildet. Im Gehäuse der erfindungsgemässen Absperrklappengehäusebaugruppe ist mindestens ein Verstärkungselement angeordnet. Es dient dazu, die Kraft, die aufgrund des auf das Schliesselement wirkenden Drucks bei geschlossener Absperrklappe auf die Achse wirkt, aufzunehmen und an Kraftaufnahmemittel zu übertragen anstatt, dass die Kraft auf das Gehäuse aus Kunststoff oder Leichtmetall wirkt. Dazu ist das Verstärkungselement mit Kraftaufnahmemitteln verbunden, vorzugsweise direkt und starr miteinander verbunden, wobei die Kraftaufnahmemittel wiederum mit den stirnseitig angeordneten Flanschen derart verbunden sind, dass auftretende Innendruckkräfte auf die Achse von den Kraftaufnahmemitteln über das Verstärkungselement aufgenommen werden. Es ist vorteilhaft, wenn die Kraftaufnahmemittel fest mit den Flanschen und dem Verstärkungselement verbunden sind.

Vorzugsweise ist das Gehäuse ein- oder zweiteilig ausgebildet. Bei einem zweiteiligen Gehäuse verläuft die Trennebene vorzugsweise rechtwinklig zur Strömungsrichtung und die beiden, vorzugsweise gleich ausgebildeten Gehäusehälften, werden mit dem dazwischen angeordneten Verstärkungselement miteinander verbunden. Bei einem einteiligen Gehäuse wird das Verstärkungselement vorzugsweise in die Form eingelegt und mit dem Material des Gehäuses umspritzt bzw. umgossen.

Es ist vorteilhaft, wenn das Verstärkungselement vom Kunststoff oder Leichtmetall des Gehäuses umgeben ist. Vorzugsweise ist das Verstärkungselement komplett vom Kunststoff oder Leichtmetall des Gehäuses umgeben bzw. darin eingebettet. Die Achse verläuft vorzugsweise durch das Verstärkungselement, das im Gehäuse angeordnet ist. Es ist vorteilhaft, wenn das Verstärkungselement eine in der Mitte liegende Durchgangsbohrung aufweist, die sich in vertikaler Richtung bzw. rechtwinklig zur Strömungsrichtung erstreckt und durch die die Achse ragt. Das Verstärkungselement weist an den Aussenflächen vorzugsweise eine Rippenstruktur auf, damit das Verstärkungselement sich fest und über eine grosse Oberfläche mit dem Kunststoffgehäuse bzw. dem Leichtmetallgehäuse verbindet, da durch die Rippenstruktur ein optimaler Formschluss erzielt wird.

Vorzugsweise ist die vertikale Achse einteilig oder mehrteilig, vorzugsweise zweiteilig, ausgebildet. Die Achse ist vorzugsweise so ausgebildet, dass sie vom oberen bis in den unteren Gehäusebereich als einteilige Achse durchgehend durch das komplette Schliesselement hindurchragt oder die Achse ist vorzugsweise zweiteilig ausgebildet, wobei der obere Teil der Achse im oberen Gehäusebereich angeordnet ist und in das Schliesselement hineinragt jedoch nicht durchgehend ist und im unteren Gehäuseteil der zweite Teil der Achse angeordnet ist, der von unten in das Schliesselement hineinragt.

Es ist vorteilhaft, wenn die vertikal verlaufende Achse, durch ein im oberen Bereich des Gehäuses angeordnetes Verstärkungselement und ein diametral dazu angeordnetes Verstärkungselement im unteren Bereich des Gehäuses verläuft. Es ist vorteilhaft, wenn die Lagerung der Achse im Gehäuse ober- und unterhalb des jeweiligen Verstärkungselements erfolgt, wozu vorzugsweise Lagerbüchsen im Gehäuse angeordnet sind. Wobei die Achse wie bereits erwähnt dazu einteilig oder zweiteilig ausgebildet sein kann.

Als bevorzugte Ausführungsform hat sich gezeigt, wenn das Verstärkungselement aus einem hochfesten Werkstoff besteht, vorzugsweise einem Werkstoff, der eine höhere Festigkeit aufweist als der umgebende Kunststoff oder das umgebende Leichtmetall des Gehäuses. Speziell bevorzugt sind metallische Werkstoffe, wie beispielsweise Stahl oder Eisenguss, oder glasfaserverstärkte Werkstoffe bzw. Kunststoffe oder Verbundmaterialien, die sich gut für die Verwendung als Verstärkungselement eignen.

Als vorteilhaft hat sich gezeigt, wenn das Verstärkungselement als Ringsegment ausgebildet ist und konzentrisch zur Durchströmungsöffnung im Gehäuse angeordnet ist. Vorzugsweise ist ein Verstärkungselement vertikal oberhalb der Durchströmungsöffnung und das zweite Verstärkungselement diametral dazu im unteren Bereich des Gehäuses angeordnet. Es ist vorteilhaft, wenn sich das Ringsegment über einen Winkel von mindestens 20° erstreckt. Vorzugsweise erstreckt sich das Ringsegment zwischen 30 bis 120°.

Es ist vorteilhaft, wenn die im Gehäuse angeordneten Verstärkungselemente gleich bzw. identisch ausgebildet sind.

Als vorteilhafte Ausführungsform hat sich gezeigt, wenn das Verstärkungselement spiegelsymmetrisch ausgebildet ist, vorzugsweise entlang der verlaufenden Achse.

Vorzugsweise sind die beiden jeweils stirnseitig des Gehäuses angeordneten Flansche mittels den Kraftaufnahmemitteln fest mit den Verstärkungselementen verbunden. Es ist vorteilhaft, wenn die Kraftaufnahmemittel an den aussenliegenden Auflageflächen der Flansche anliegen. Wobei als Kraftaufnahmemittel vorzugsweise Verbindungmittel wie beispielsweise Schrauben eingesetzt werden können. Die Kraftaufnahmemittel erstrecken sich von beiden Flanschen her in Richtung dazwischenliegender Gehäuse und sind fest mit dem Verstärkungselement verbunden.

Es ist vorteilhaft, wenn die Kraftaufnahmemittel jeweils auf beiden Seiten der Achse angeordnet sind, dies gewährleistet eine symmetrische Kraftübertragung, so dass die Kraft die auf die Achse wirkt in das Verstärkungselement auf die Kraftaufnahmemittel geleitet wird. Vorzugsweise sind die Kraftaufnahmemittel in Strömungsrichtung wie auch horizontal, rechtwinklig zur Strömungsrichtung beidseitig der Achse angeordnet.

Alle Ausgestaltungmöglichkeiten sind untereinander frei kombinierbar.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: eine dreidimensionale Schnittansicht durch eine erfindungsgemässe Absperrklappengehäusebaugruppe mit einer zweiteiligen Achse,
- Fig. 2: eine dreidimensionale Schnittansicht durch eine erfindungsgemässe Absperrklappengehäusebaugruppe mit einer einteiligen Achse,
- Fig. 3: eine dreidimensionale Schnittansicht durch zwei sich gegenüberliegende Kraftaufnahmemittel im oberen Gehäusebereichs,
- Fig. 4: einen dreidimensionalen Längsschnitt durch eine erfindungsgemässe Absperrklappengehäusebaugruppe,

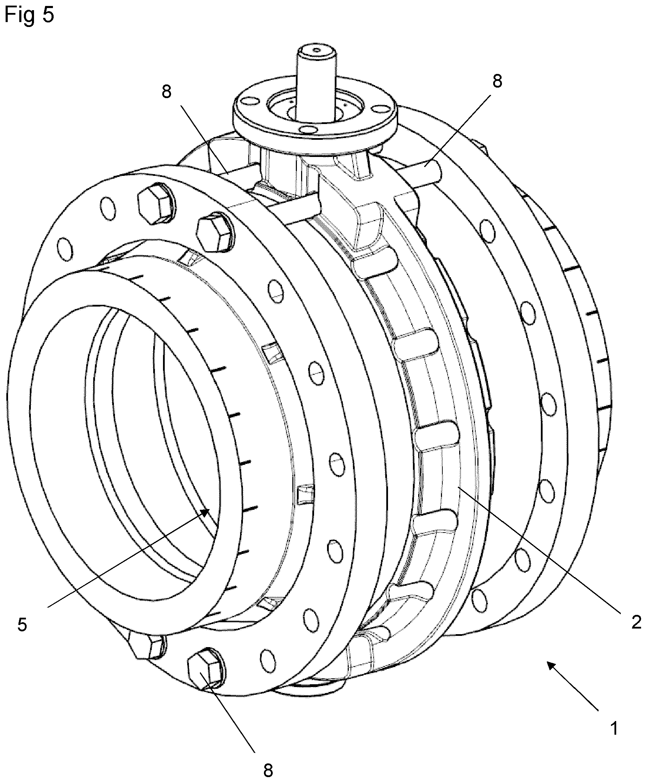

- Fig. 5: eine dreidimensionale Ansicht einer erfindungsgemässen Absperrklappengehäusebaugruppe,
- Fig. 6: eine dreidimensionale Ansicht des oberen und unteren Verstärkungselements mit den Kraftaufnahmemitteln und
- Fig. 7: einen horizontalen Teilschnitt durch das obere Verstärkungselement.

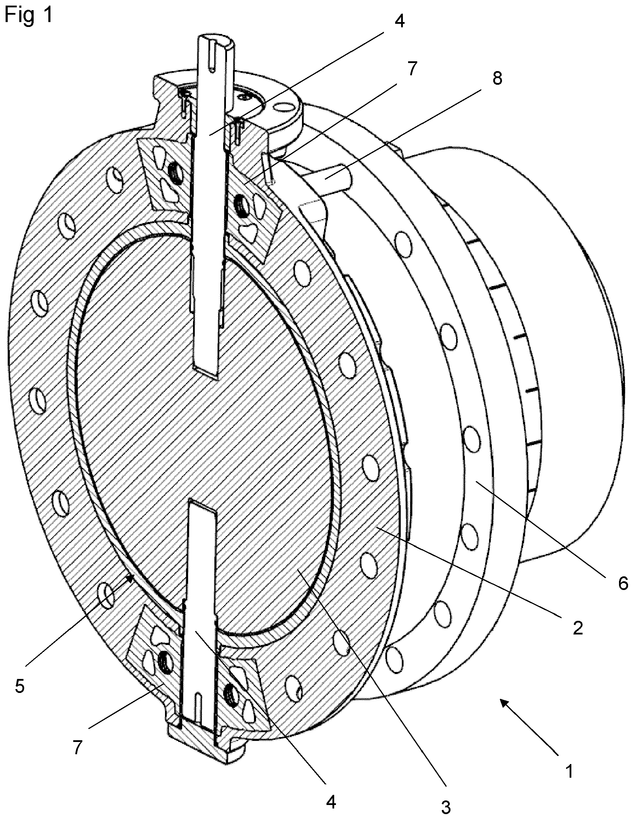

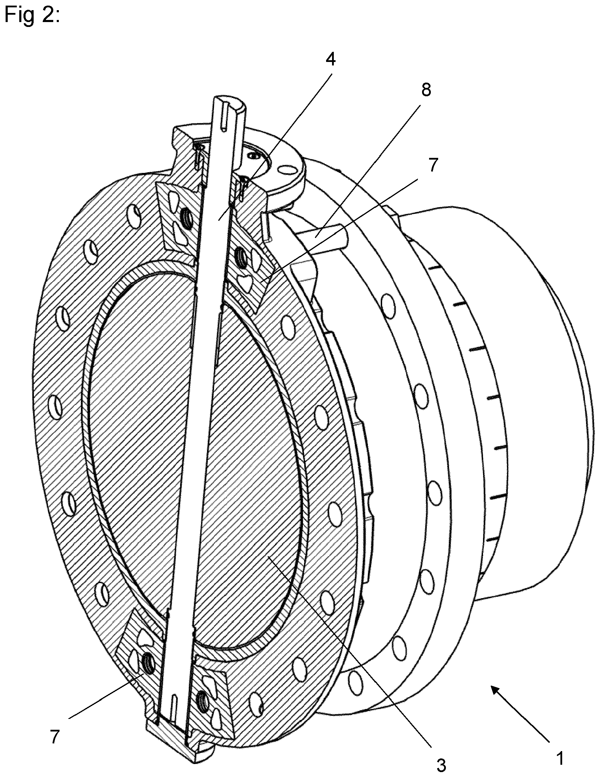

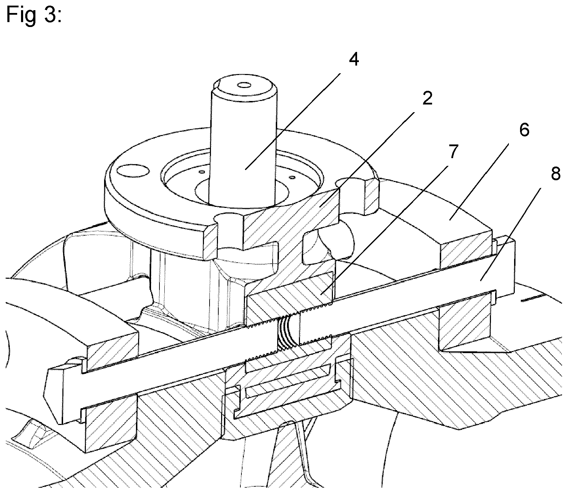

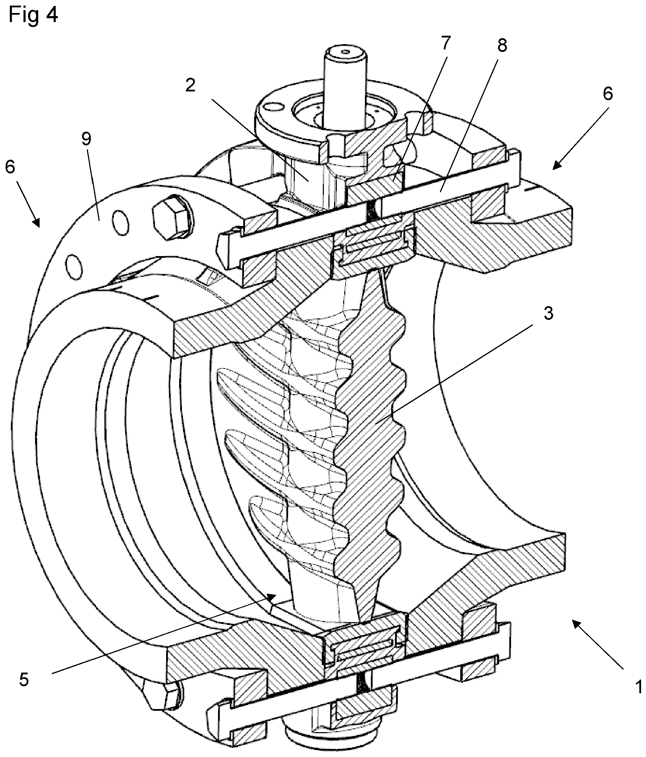

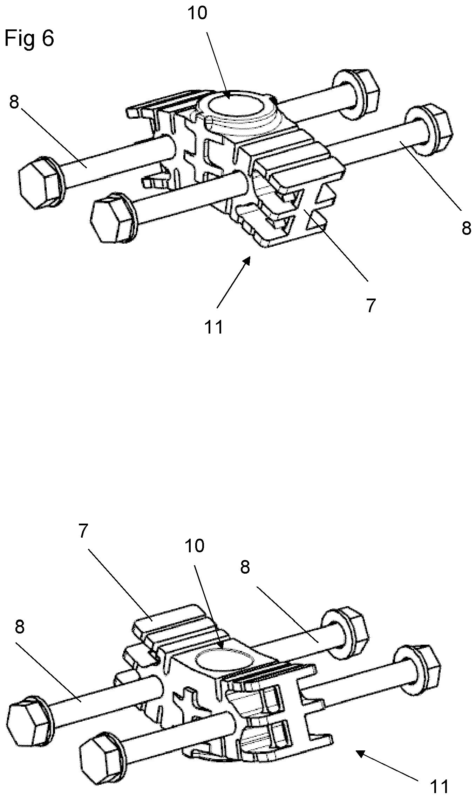

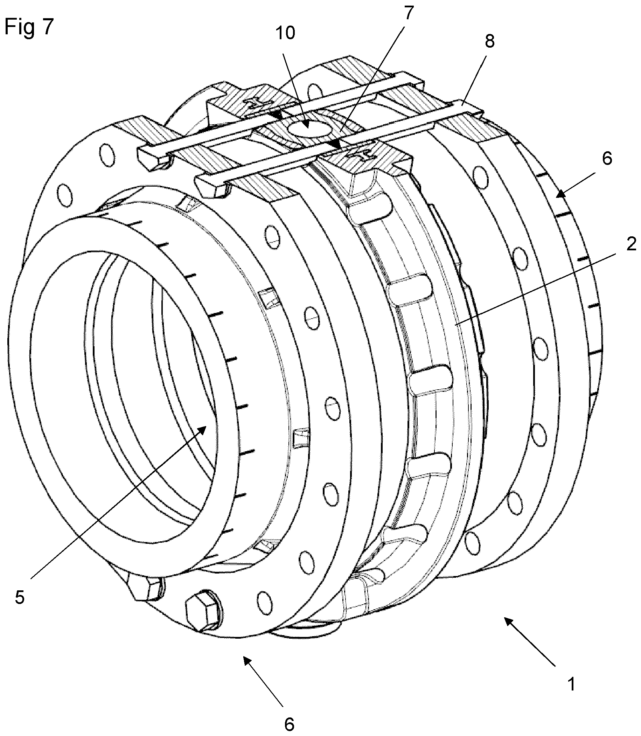

Die in Fig. 1 dargestellte Zeichnung zeigt eine erfindungsgemässe Absperrklappengehäusebaugruppe 1 einer Absperrklappe mit einem drehbar im Gehäuse 2 gelagerten Schliesselement 3. Das Gehäuse 2 ist aus Kunststoff oder Leichtmetall hergestellt. Im Gehäuse 2 ist eine vertikal verlaufende Achse 4 angeordnet, wobei die Achse 4 als einteilige Achse 4, wie in Fig. 2 dargestellt, oder als mehrteilige vorzugsweise zweiteilige Achse 4 wie in Fig. 1 dargestellt, ausgebildet ist. Das Gehäuse 2 weist eine Durchströmungsöffnung 5 auf, in der ein Schliesselement 3 angeordnet ist auf. Stirnseitig des Gehäuses 2 sind jeweils Flasche 6 angeordnet, wobei die Flansche 6 als Los- oder Festflansche ausgebildet sein können. In den Figuren sind Losflansche 6 abgebildet, die wie erwähnt auch durch Festflansche ersetzbar sind. Es ist vorteilhaft, wenn die Flansche 6 aus einem metallischen oder einem verstärkten Kunststoff hergestellt sind. Die Flansche 6 werden mit dem dazwischenliegenden Gehäuse 2 mittels Befestigungsmittel (nicht dargestellt) montiert. Im Kunststoffgehäuse 2 ist mindestens ein Verstärkungselement 7 angeordnet. Vorzugsweise sind mindestens zwei Verstärkungselemente 7, jeweils eines im oberen und eines im unteren Gehäusebereich angeordnet, durch die die Achse 4 hindurch ragt. Das Verstärkungselement 7 ist mittels Kraftaufnahmemitteln 8 mit den Flanschen 6 derart verbunden, dass auf die Achse 4 auftretende Innendruckkräfte während einer geschlossenen Absperrklappe von den Kraftaufnahmemitteln 8 über das Verstärkungselement 7 aufgenommen werden. Das heisst, die Druckkräfte, die auf die Achse 4 wirken, werden vom Verstärkungselement 7 aufgenommen und an die Kraftaufnahmemittel 8 übertragen, die mit den Flanschen 6 verbunden sind und dadurch eine stabile Anordnung bilden. Gut ersichtlich ist in den Figuren 3 und 4, dass die Kraftaufnahmemittel 8 an den aussenliegenden Auflageflächen 9 der Flansche 6 anliegen und in das Verstärkungselement 7 ragen bzw. mit diesem verbunden sind und eine starre Einheit bilden. Die Kraftaufnahmemittel 8 verlaufen vorzugsweise parallel zur Durchflussrichtung angeordnet. In den Figuren 1 und 2 wie auch 7 ist gut zu erkennen, dass das Verstärkungselement 7 vom Gehäuse 2 bzw. dessen Kunststoff oder Leichtmetall vollständig umgeben ist. Es ist vorteilhaft, wenn die Verstärkungselemente 7 diametral und konzentrisch um die Durchströmungsöffnung 5 bzw. zur Längsachse in Strömungsrichtung angeordnet sind. Es ist zu bevorzugen wenn die im Gehäuse 2 angeordneten Verstärkungselement 7 gleich ausgebildet sind. In Fig. 6 sind die beiden im Gehäuse 2 diametral angeordneten Verstärkungselemente 7 mit den Kraftaufnahmemitteln 8 ohne umgebendes Gehäuse 2 gezeigt. Das Verstärkungselement 7 weist vorzugsweise an der Aussenfläche eine Rippenstruktur 11 auf, wodurch eine grosse Oberfläche geschaffen wird und dadurch eine gute Einbindung in das Gehäuse 2 gewährleistet wird. Die Kraftaufnahmemittel 8 sind vorzugsweise als Schrauben ausgebildet, wobei auch andere Kraftaufnahmemittel 8 eingesetzt werden können, die mit dem Verstärkungselement 7 fest verbunden sind und an den aussenliegenden Auflageflächen 9 der Flansche 6 anliegen, wodurch die auf die Achse 4 wirkende Kraft aufgenommen wird, so dass das Kunststoff- oder Leichtmetallgehäuse 2 nicht belastet wird. Es ist vorteilhaft, wenn das Verstärkungselement 7 aus einem hochfesten Werkstoff ist, vorzugsweise einem Werkstoff, der eine höhere Festigkeit aufweist als der umgebende Kunststoff oder das umgebende Leichtmetall des Gehäuses 2. Speziell bevorzugt besteht das Verstärkungselement 7 aus einem metallischen Werkstoff, wie beispielsweise Stahl oder einem Eisenguss oder einem glasfaserverstärkten Kunststoff. Es ist vorteilhaft, was aus den Figuren 1 und 2 sowie 7 gut zu erkennen ist, wenn das Verstärkungselement 7 als Ringsegment ausgebildet ist. Dadurch kann es optimal in das Gehäuse 2 eingebettet werden, so dass es konzentrisch um die Durchströmungsöffnung 5 angeordnet ist. Vorzugsweise erstreckt sich das Ringsegment über einen Winkel zwischen 30 bis 120°. Vorzugsweise ist ein Verstärkungselement 7 vertikal oberhalb und eines vertikal unterhalb der Durchströmungsöffnung 5 angeordnet, so dass die vertikal verlaufenden Achse 4 durch die Durchgangsbohrung 10 im Verstärkungselemente 7 verläuft. Die Kraftaufnahmemittel 8 sind beidseitig der Achse 4 angeordnet, damit eine gleichmässige Kraftverteilung erfolgt. Es ist vorteilhaft, wenn die Kraftaufnahmemittel 8 in Strömungsrichtung wie auch rechtwinklig zur Strömungsrichtung links und rechts von der Achse 4, jeweils in gleichem Abstand angeordnet sind, was gut aus Fig. 7 erkennbar ist.

### Bezugszeichenliste

- 1: Absperrklappengehäusebaugruppe
- 2: Gehäuse
- 3: Schliesselement
- 4: Achse
- 5: Durchströmungsöffnung
- 6: Flansch
- 7: Verstärkungselement
- 8: Kraftaufnahmemittel
- 9: Auflagefläche Flansch
- 10: Durchgangsbohrung
- 11: Rippenstruktur

## Patentansprüche

1. Absperrklappengehäusebaugruppe (1) für eine Absperrklappe mit einem drehbar im Gehäuse (2) um eine vertikal verlaufende Achse (4) gelagerten Schliesselement (3), beinhaltend ein Gehäuse (2) aus Kunststoff oder Leichtmetall, eine vertikal verlaufende Achse (4), eine im Gehäuse angeordnete Schliesselement (3) aufnehmenden Durchströmungsöffnung (5) und stirnseitig angeordnete Flansche (6), **dadurch gekennzeichnet, dass** im Gehäuse (2) mindestens ein Verstärkungselement (7) angeordnet ist das mittels Kraftaufnahmemitteln (8) mit den Flansche (6) derart verbunden ist, dass auf die Achse (4) auftretende Innendruckkräfte von den Kraftaufnahmemitteln (8) über das Verstärkungselement (7) aufgenommen werden.

2. Absperrklappengehäusebaugruppe (1) nach Anspruch 1, **dadurch gekennzeichnet, dass** das Gehäuse (2) ein oder zweiteilig ausgebildet ist.

3. Absperrklappengehäusebaugruppe (1) nach einem der Ansprüche 1 oder 2, **dadurch gekennzeichnet, dass** das Verstärkungselement (7) vom Kunststoff oder Leichtmetall des Gehäuses (2) umgeben ist.

4. Absperrklappengehäusebaugruppe (1) nach einem der Ansprüche 1 bis 3, **dadurch gekennzeichnet, dass** die vertikale Achse (4) einteilig oder mehrteilig ausgebildet ist.

5. Absperrklappengehäusebaugruppe (1) nach einem der Ansprüche 1 bis 4, **dadurch gekennzeichnet, dass** die vertikal verlaufende Achse (4), durch ein im oberen Bereich des Gehäuses (2) angeordnetes Verstärkungselement (7) und ein diametral dazu angeordnetes Verstärkungselement (7) im unteren Bereich des Gehäuses verläuft.

6. Absperrklappengehäusebaugruppe (1) nach einem der Ansprüche 1 bis 5, **dadurch gekennzeichnet, dass** das Verstärkungselement (7) aus einem hochfesten Werkstoff ist, vorzugsweise einem Werkstoff, der eine höhere Festigkeit aufweist als das umgebende Material des Gehäuses (2), speziell bevorzugt einem metallischen Werkstoff, vorzugsweise Stahl oder Eisenguss, oder einem glasfaserverstärkten Werkstoff oder einem Verbundmaterial.

7. Absperrklappengehäusebaugruppe (1) nach einem der Ansprüche 1 bis 6, **dadurch gekennzeichnet, dass** das Verstärkungselement (7) als Ringsegment ausgebildet ist und konzentrisch zur Durchströmungsöffnung (5) im Gehäuse (2) angeordnet ist.

8. Absperrklappengehäusebaugruppe (1) nach einem der Ansprüche 1 bis 7, **dadurch gekennzeichnet, dass** die beiden jeweils stirnseitig des Gehäuses (2) angeordneten Flansche (6) mittels den Kraftaufnahmemitteln (8) fest mit den Verstärkungselementen (7) verbunden sind.

9. Absperrklappengehäusebaugruppe (1) nach einem der Ansprüche 1 bis 8, **dadurch gekennzeichnet, dass** die Kraftaufnahmemittel (8) jeweils auf beiden Seiten der Achse (4) angeordnet sind.

10. Absperrklappengehäusebaugruppe (1) nach einem der Ansprüche 1 bis 9, **dadurch gekennzeichnet**, die im Gehäuse (2) angeordneten Verstärkungselemente (7) gleich ausgebildet sind.

11. Absperrklappengehäusebaugruppe (1) nach einem der Ansprüche 1 bis 10, **dadurch gekennzeichnet, dass** das Verstärkungselement (7) spiegelsymmetrisch ausgebildet ist.
